# EUROPEAN PATENT APPLICATION

(11) **EP 4 624 982 A1**
(43) Date of publication of application: **01.10.2025**
(21) Application number: 24218536.1
(22) Date of filing: 10.12.2024
(51) Int. Cl.: G01S 7/481, G01S 7/486, G01S 7/497, G01S 17/10

(54) **LASER BEAM TESTER FOR LASER BEAM TIMING AND LOCATION DETERMINATION, CORRESPONDING SYSTEM AND METHOD**

(30) Priority: 28.03.2024 US 202418620363
(71) Applicant: Rohde & Schwarz GmbH & Co. KG, 81671 München (DE)
(72) Inventor: Ueffing, Dr. Moritz, 81477 Munich (DE); Fink, Maximilian, 80799 Munich (DE); Simper, Benedikt, 84172 Buch am Erlbach (DE)
(74) Representative: Rupp, Christian

(57) **Abstract**

A laser beam tester for laser beam timing and location determination with respect to a repetitive scan of at least one laser beam in a scan area based on at least one scan frame is provided. Said laser beam tester comprises an optical receiver configured to receive the at least one laser beam in an observation area, and a processor being in communication with the optical receiver. The processor is configured to determine the corresponding scan timing of the at least one laser beam. Furthermore, the processor is configured to associate the corresponding time domain of the laser beam tester with the scan timing of the at least one laser beam.

## Description

### Technical Field

The present disclosure relates to laser beam testing or laser beam timing and location determination, respectively. In particular, the present disclosure relates to a laser beam tester for laser beam timing and location determination with respect to a repetitive scan of at least one laser beam in a scan area based on at least one scan frame, a system comprising such a laser beam tester and a laser beam emitting device, and a method for laser beam timing and location determination with respect to a repetitive scan of at least one laser beam in a scan area based on at least one scan frame.

### Background Art

Generally, in times of an increasing number of applications employing laser beam emitting devices, such as autonomous driving applications employing lidar (light detection and ranging) sensors, there is a growing need of a laser beam tester for laser beam timing and location determination with respect to a repetitive scan of at least one laser beam in a scan area based on at least one scan frame, a system comprising such a laser beam tester and a laser beam emitting device, and a method for laser beam timing and location determination with respect to a repetitive scan of at least one laser beam in a scan area based on at least one scan frame in order to verify correct functioning of said applications in a highly accurate and efficient manner.

US 8,259,311 B2 relates to a system for determining a position by emitting a first laser beam by a laser source positioned in a reference system onto a detector and simultaneously detecting the first laser beam by the detector, thus defining an emission direction of the laser source. The detector has a segmented detection area comprising a plurality of discrete partial detection areas, each having a defined partial detection direction and at least two partial detection directions thereof being different. When detecting the first laser beam, an impingement point of the first laser beam on the detector is detected by means of at least one partial detection area, and when determining the incidence direction, said direction is derived from the at least one partial detection direction. The location of the detector relative to the laser source and the reference system is then determined using the emission direction and the incidence direction.

Disadvantageously, said system does not allow for laser beam testing or laser beam timing and location determination, respectively.

### Summary

Thus, there is a need to provide a laser beam tester for laser beam timing and location determination with respect to a repetitive scan of at least one laser beam in a scan area based on at least one scan frame, a system comprising such a laser beam tester and a laser beam emitting device, and a method for laser beam timing and location determination with respect to a repetitive scan of at least one laser beam in a scan area based on at least one scan frame, wherein laser beam timing and location can be determined in a particularly accurate and efficient manner.

This is achieved by the embodiments provided in the enclosed independent claims. Advantageous implementations of the present disclosure are further defined in the dependent claims.

According to a first aspect of the present disclosure, a laser beam tester for laser beam timing and location determination with respect to a repetitive scan of at least one laser beam in a scan area based on at least one scan frame is provided. Said laser beam tester comprises an optical receiver configured to receive the at least one laser beam in an observation area, and a processor being in communication with the optical receiver. The processor is configured to determine the corresponding scan timing of the at least one laser beam. Furthermore, the processor is configured to associate the corresponding time domain of the laser beam tester with the scan timing of the at least one laser beam. Advantageously, laser beam timing and location can be determined in a particularly accurate and efficient manner.

According to an implementation form of the first aspect of the present disclosure, the processor is configured to determine the corresponding power distribution of the at least one laser beam based on the scan timing. Advantageously, for instance, the maximum individual power in time can be got.

According to a further implementation form of the first aspect of the present disclosure, the processor is configured to change the corresponding location of the observation area to determine the corresponding power distribution of the laser beam based on the scan timing. Advantageously, for example, scan timing can comprise absolute time as well as relative to the corresponding repetition rate.

According to a further implementation form of the first aspect of the present disclosure, the processor is configured to determine a time-based power distribution of different and/or subsequent scan frames. Advantageously, for instance, the time-based power distribution can comprise time relative to the corresponding repetition rate, which can analogously apply for the following implementation form.

According to a further implementation form of the first aspect of the present disclosure, the processor is configured to change the corresponding location of the observation area, especially across the scan area, to determine a time-based power distribution of different and/or subsequent scan frames.

According to a further implementation form of the first aspect of the present disclosure, the observation area is smaller than the scan area. Advantageously, for example, the observation area can be moved in an overlapping or non-overlapping manner to cover the scan area.

According to a further implementation form of the first aspect of the present disclosure, the processor is configured to use the time domain associated with the scan timing to determine a time-based scan pattern of the at least one laser beam for an entire or partial repetition. Advantageously, for instance, the corresponding device emitting the at least one laser beam can be characterized in a particularly accurate and efficient manner.

According to a further implementation form of the first aspect of the present disclosure, the processor is configured to provide the corresponding power of the at least one laser beam especially to a user. Advantageously, for example, the laser beam tester can comprise a display being in communication with the processor, wherein the display is configured to display the corresponding power of the at least one laser beam.

According to a further implementation form of the first aspect of the present disclosure, the processor is configured to provide a scan pattern analysis with respect to the at least one scan frame especially to a user. Advantageously, for instance, the laser beam tester can comprise a display being in communication with the processor, wherein the display is configured to display the scan pattern analysis.

According to a further implementation form of the first aspect of the present disclosure, the processor is configured to determine a frame rate with respect to the at least one scan frame. Advantageously, for example, it can efficiently be determined how long the corresponding full scan takes.

According to a further implementation form of the first aspect of the present disclosure, the processor is configured to determine a repetition rate, especially a maximum repetition rate, for adjacent laser beams. Advantageously, for instance, it can efficiently be determined how fast the corresponding laser beams or pulses, respectively, occur.

According to a further implementation form of the first aspect of the present disclosure, the processor is configured to determine average power for a particular time window with respect to the at least one laser beam. Advantageously, for example, eye safety requirements can be checked or achieved, respectively, in a reliable manner.

According to a further implementation form of the first aspect of the present disclosure, the scan timing comprises or is repetition frequency and/or phase with respect to the at least one laser beam. In addition to this or as an alternative, the processor is configured to associate the corresponding time domain of the laser beam tester with the corresponding location and/or angle of the at least one laser beam. Advantageously, for instance, efficiency can be increased.

According to a further implementation form of the first aspect of the present disclosure, the laser beam tester further comprises an optical transmitter being in communication with the processor, wherein the optical transmitter is configured to transmit a return light signal in response to the at least one laser beam. Advantageously, for example, a lidar target can be emulated or simulated, respectively.

According to a further implementation form of the first aspect of the present disclosure, the processor is configured to manipulate the return light signal on the corresponding time basis to map a response to a particular location. Advantageously for instance, a lot of additional resolution can be given.

According to a further implementation form of the first aspect of the present disclosure, the processor is configured to manipulate the return light signal to shape at least one return object. Advantageously, for example, the at least one return object can comprise or be a lidar target.

According to a further implementation form of the first aspect of the present disclosure, the processor is configured to increase contrast of the return light signal especially with the aid of spatial and/or temporal filtering. Advantageously, for instance, a lidar sensor can be tested in a particularly accurate and efficient manner.

According to a second aspect of the present disclosure, a system is provided. Said system comprises the laser beam tester according to the first aspect of the present disclosure or any of its implementation forms, respectively, and a laser beam emitting device configured to provide a repetitive scan of at least one laser beam in a scan area based on at least one scan frame, especially a lidar device or a lidar sensor. In this context, the laser beam tester is configured to determine laser beam timing and location with respect to the repetitive scan of the at least one laser beam. Advantageously, laser beam timing and location can be determined in a particularly accurate and efficient manner.

According to an implementation form of the second aspect of the present disclosure, the processor of the laser beam tester is configured to set a frame trigger of the laser beam tester such that the frame trigger of the laser beam tester has a constant offset to a frame start of the laser beam emitting device. Advantageously, for instance, a global frame trigger can be realized.

According to a third aspect of the present disclosure, a method, especially using the laser beam tester according to the first aspect of the present disclosure or any of its implementation forms, respectively, for laser beam timing and location determination with respect to a repetitive scan of at least one laser beam in a scan area based on at least one scan frame is provided. Said method comprises the steps of receiving the at least one laser beam in an observation area, determining the corresponding scan timing of the at least one laser beam, and associating the corresponding time domain, especially of the laser beam tester, with the scan timing of the at least one laser beam. Advantageously, laser beam timing and location can be determined in a particularly accurate and efficient manner.

### Brief Description of the Drawings

The above-described aspects and implementation forms of the present disclosure will be explained in the following description of specific embodiments in relation to the enclosed drawings, in which:
Fig. 1 shows an exemplary embodiment of a laser beam tester in combination with an exemplary embodiment of a system comprising the latter and a laser beam emitting device;
Fig. 2 shows a further exemplary embodiment of a laser beam tester in combination with a further exemplary embodiment of a system comprising the latter and a laser beam emitting device;
Fig. 3 exemplary illustrates the corresponding functioning of the laser beam tester according to Fig. 1 or of the laser beam tester according to Fig. 2, respectively, especially in the context of changing the corresponding location of the observation area; and
Fig. 4 shows a flow chart of an exemplary embodiment of a method for laser beam timing and location determination.

### Detailed Descriptions of Embodiments

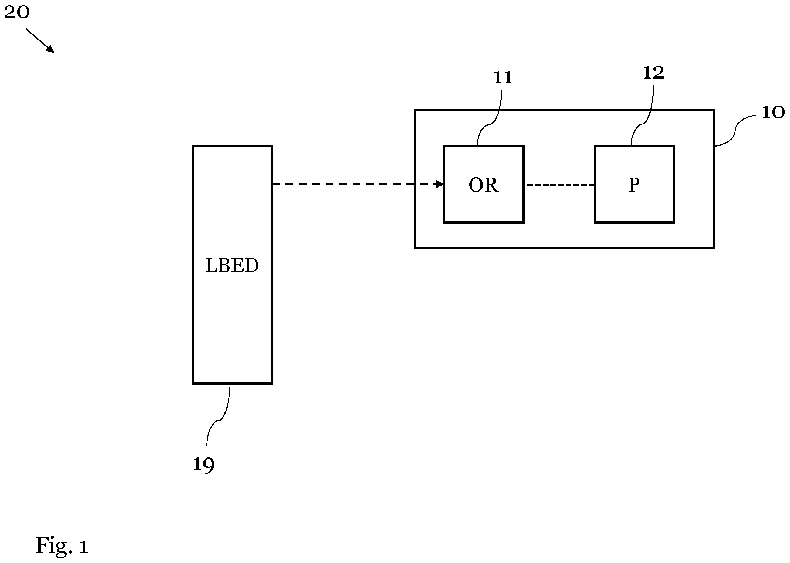

Firstly, with respect to Fig. 1, a laser beam tester 10 for laser beam timing and location determination with respect to a repetitive scan of at least one laser beam in a scan area based on at least one scan frame is illustrated. Exemplarily, said at least one laser beam is emitted by a laser beam emitting device 19. Said laser beam emitting device 19 may especially be a lidar device or a lidar sensor.

For the sake of completeness, it is noted that said Fig. 1 further depicts a system 20 comprising said laser beam tester 10 and said laser beam emitting device 19. In this context, as indicated above, the laser beam emitting device 19 is configured to provide a repetitive scan of at least one laser beam in a scan area based on at least one scan frame, and the laser beam tester 10 is configured to determine laser beam timing and location with respect to the repetitive scan of the at least one laser beam.

As it can further be seen from Fig. 1, the laser beam tester 10 comprises an optical receiver 11 configured to receive the at least one laser beam in an observation area, and a processor 12 being in communication with the optical receiver 11. The processor 12 is configured to determine the corresponding scan timing of the at least one laser beam. In addition to this, the processor 12 is configured to associate the corresponding time domain of the laser beam tester 10 with the scan timing of the at least one laser beam.

Again, with respect to the above-mentioned system 20, it is noted that it might be particularly advantageous if the processor 12 of the laser beam tester 10 is configured to set a frame trigger of the laser beam tester 10 such that the frame trigger of the laser beam tester 10 has a constant offset to a frame start of the laser beam emitting device 19.

With respect to the above-mentioned scan timing, it is noted that it might be particularly advantageous if on the basis of the scan timing, a heartbeat or heartbeat signal, respectively, is given. It is further noted that said heartbeat or heartbeat signal, respectively, may especially be understood as a signal that is synchronized with the frame rate of the laser beam emitting device 19 and comes either at each start of a corresponding frame or with a constant delay to the start of the frame.

With respect to the above-mentioned processor 12, it is noted that it might be particularly advantageous if the processor 12 is configured to determine the corresponding power distribution of the at least one laser beam based on the scan timing.

Furthermore, it might be particularly advantageous if the processor 12 is configured to change the corresponding location of the observation area to determine the corresponding power distribution of the laser beam based on the scan timing.

Moreover, it might be particularly advantageous if the processor 12 is configured to determine a time-based power distribution of different and/or subsequent scan frames.

It is further noted that it might be particularly advantageous if the processor 12 is configured to change the corresponding location of the observation area, especially across the scan area, to determine a time-based power distribution of different and/or subsequent scan frames.

With respect to the above-mentioned scan area and the above-mentioned observation area, it is noted that it might be particularly advantageous if the observation area is smaller than the scan area.

Again, with respect to the above-mentioned processor 12, it is noted that it might be particularly advantageous if the processor 12 is configured to use the time domain associated with the scan timing to determine a time-based scan pattern of the at least one laser beam for an entire repetition.

Furthermore, it might be particularly advantageous if the processor 12 is configured to provide the corresponding power of the at least one laser beam especially to a user.

Moreover, it might be particularly advantageous if the processor 12 is configured to provide a scan pattern analysis with respect to the at least one scan frame especially to a user.

It is further noted that it might be particularly advantageous if the processor 12 is configured to determine a frame rate with respect to the at least one scan frame.

Furthermore, it is noted that it might be particularly advantageous if the processor 12 is configured to determine a maximum repetition rate for adjacent laser beams.

Moreover, it is noted that it might be particularly advantageous if the processor 12 is configured to determine average power for a particular time window with respect to the at least one laser beam.

Again, with respect to the above-mentioned scan timing, it is noted that it might be particularly advantageous if the scan timing comprises or is repetition frequency and/or phase with respect to the at least one laser beam.

It is further noted that it might be particularly advantageous if the processor 12 is configured to associate the corresponding time domain of the laser beam tester with the corresponding location and/or angle of the at least one laser beam.

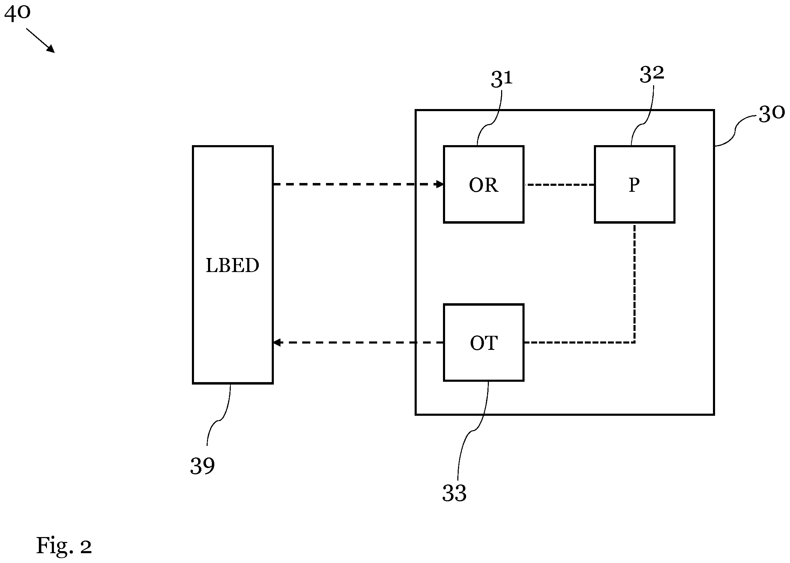

Now, with respect to Fig. 2, a laser beam tester 30 for laser beam timing and location determination with respect to a repetitive scan of at least one laser beam in a scan area based on at least one scan frame is illustrated. Exemplarily, said at least one laser beam is emitted by a laser beam emitting device 39. Said laser beam emitting device 19 may especially be a lidar device or a lidar sensor.

For the sake of completeness, it is noted that said Fig. 2 further depicts a system 40 comprising said laser beam tester 30 and said laser beam emitting device 39. In this context, as indicated above, the laser beam emitting device 39 is configured to provide a repetitive scan of at least one laser beam in a scan area based on at least one scan frame, and the laser beam tester 30 is configured to determine laser beam timing and location with respect to the repetitive scan of the at least one laser beam.

As it can further be seen from Fig. 2, the laser beam tester 10 comprises an optical receiver 31 configured to receive the at least one laser beam in an observation area, a processor 32 being in communication with the optical receiver 31, and an optical transmitter 33 being in communication with the processor 32. The processor 32 is configured to determine the corresponding scan timing of the at least one laser beam. In addition to this, the processor 32 is configured to associate the corresponding time domain of the laser beam tester 30 with the scan timing of the at least one laser beam. Further additionally, the optical transmitter 33 is configured to transmit a return light signal, exemplarily to the laser beam emitting device 39, in response to the at least one laser beam.

It is noted that the explanations above regarding the laser beam tester 10 can analogously apply for the laser beam tester 30, and vice versa. The explanations above regarding the optical receiver 11 can analogously apply for the optical receiver 31, and vice versa. Furthermore, the explanations above regarding the processor 12 can analogously apply for the processor 32, and vice versa. Moreover, the explanations above regarding the laser beam emitting device 19 can analogously apply for the laser beam emitting device 39, and vice versa.

Again, with respect to the above-mentioned system 40, it is noted that it might be particularly advantageous if the processor 32 of the laser beam tester 30 is configured to set a frame trigger of the laser beam tester 30 such that the frame trigger of the laser beam tester 30 has a constant offset to a frame start of the laser beam emitting device 39. It is further noted that the explanations above regarding the system 20 can analogously apply for the system 40, and vice versa.

With respect to the above-mentioned processor 32, it is noted that it might be particularly advantageous if the processor 32 is configured to manipulate the return light signal on the corresponding time basis to map a response to a particular location.

Furthermore, it might be particularly advantageous if the processor 32 is configured to manipulate the return light signal to shape at least one return object. It is noted that the laser beam tester 30 may especially comprise or be a lidar target emulator or a lidar target simulator.

Moreover, it might be particularly advantageous if the processor 32 is configured to increase contrast of the return light signal especially with the aid of spatial and/or temporal filtering.

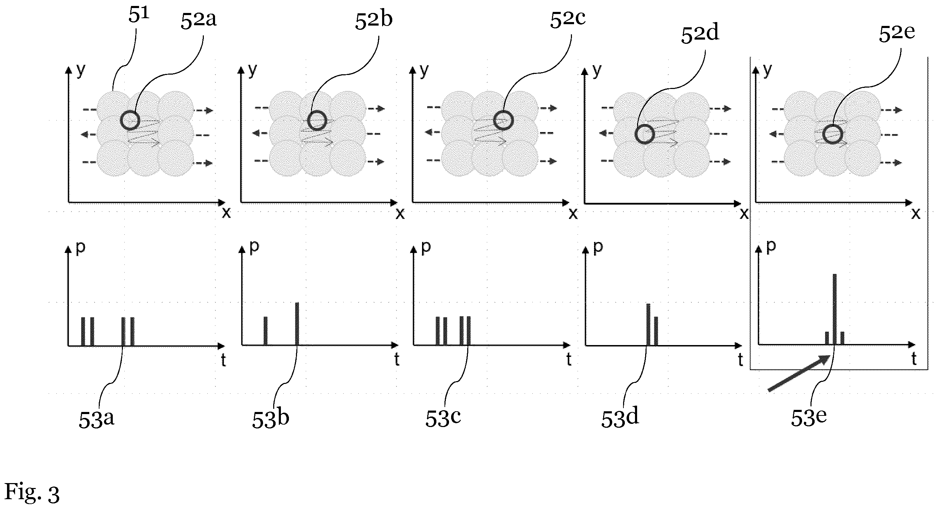

Now, with respect to Fig. 3, it is noted that said Fig. 3 exemplary illustrates the corresponding functioning of the laser beam tester 10 according to Fig. 1 or of the laser beam tester 30 according to Fig. 2, respectively, especially in the context of changing the corresponding location of the observation area as explained above.

The illustration of Fig. 3 comprises two lines and five columns, wherein each cell of the top line comprises a two-dimensional coordinate system or a y-over-x diagram, respectively, and each cell of the bottom line comprises a corresponding power-over-time diagram.

Each of said two-dimensional coordinate systems or a y-over-x diagrams, respectively, illustrates an exemplary scan area, such as the above-mentioned scan area, wherein within said scan area, scanning, especially line-by-line scanning, is performed with the aid of at least one laser beam.

Furthermore, each of said exemplary scan areas illustrated in the top line of Fig. 3 exemplarily comprises nine different areas representing the correspondingly impinging laser beams. As it can be seen from Fig. 3, each of said nine different areas comprises a circular shape, wherein one of said nine different areas is representatively equipped with reference sign 51.

As it can further be seen from Fig. 3, in each of the two-dimensional coordinate systems or a y-over-x diagrams, respectively, an exemplary observation area, such as the above-mentioned observation area in which the at least one laser beam is received with the aid of the optical receiver 11 or 31, respectively, is exemplarily marked with the aid of a circ and correspondingly equipped with reference signs 52a, 52b, 52c, 52d, 52e. In addition to this, in each of the corresponding power-over-time diagram illustrated in the bottom line of Fig. 3, the respective power or pulse, respectively, corresponding to said marking is equipped with reference signs 53a, 53b, 53c, 53d, 53e.

Especially in the light of Fig. 3, it is noted that the above-mentioned laser beam tester 10 or 30, respectively, can be configured to provide a global frame trigger. Preferably, said global frame trigger allows measuring the time of emission of the at least one laser beam or corresponding light pulses, respectively, on a time scale relative to the start of a frame. It is noted that the corresponding start of a frame can be arbitrary but is preferably fixed for a measurement cycle. Accordingly, the start of a frame of the laser beam tester 10 or 30, respectively, does not necessarily coincide with the start of a frame of the laser beam emitting device 19 or 39, respectively. It is further noted that the corresponding frame trigger of the laser beam tester 10 or 30, respectively, can have a constant offset to the corresponding frame start of the laser beam emitting device 19 or 39, respectively.

Furthermore, especially with respect to the above-mentioned explanation that the corresponding start of a frame can be arbitrary but is preferably fixed for a measurement cycle, it is noted that the frame trigger can be an arbitrary time within a corresponding frame of the laser beam emitting device 19 or 39, respectively. Preferably, especially as the corresponding scan pattern of the laser beam emitting device 19 or 39, respectively, might be repetitive, the frame trigger is at the same time relative to the corresponding frame timing of the laser beam emitting device 19 or 39, respectively. For instance, the corresponding frame start of the laser beam tester 10 or 30, respectively, can always be 5 ms or 10 ms or another certain time value after the corresponding frame start of the laser beam emitting device 19 or 39, respectively.

Moreover, it is noted that it might be particularly advantageous if, especially to receive the at least one laser beam in the form of a two-dimensional coordinate system or a y-over-x diagram, respectively, such as illustrated by the top line of Fig. 3, the above-mentioned optical receiver 11 or 31, respectively, comprises a screen.

It is further noted that it might be particularly advantageous if said optical receiver 11 or 31, respectively, and/or the above-mentioned optical transmitter 33 comprises at least one of at least one acousto-optical modulator, at least one Pockels cell, at least one optical parametric amplifier, or any combination thereof.

With respect to the above-mentioned laser beam tester 10 or 30, respectively, it is noted that it might be particularly advantageous if said laser beam tester 10 or 30, respectively, comprises a selector and/or a selection element and/or a selective element configured to manipulate and/or adjust the above-mentioned return light signal. It is further noted that said selector and/or a selection element and/or a selective element may be configured to make use of the corresponding time synchronization to select specific signals. Besides, the selector and/or a selection element and/or a selective element may comprise or be at least one of at least one acousto-optical modulator, at least one Pockels cell, at least one optical parametric amplifier, or any combination thereof.

Moreover, with the aid of said selector and/or a selection element and/or a selective element, the above-mentioned processor 32 may be configured to manipulate and/or adjust the return light signal to shape at least one return object. Additionally or alternatively, also with the aid of said selector and/or a selection element and/or a selective element, the processor 32 may be configured to manipulate and/or adjust the return light signal on the corresponding time basis to map a response to a particular location.

Furthermore, especially in the light of Fig. 3, it might be particularly advantageous if the laser beam tester 10 or 30, respectively, is configured to perform pulse selection, preferably optical pulse selection, more preferably exclusively optical pulse selection, especially with respect to the at least one laser beam.

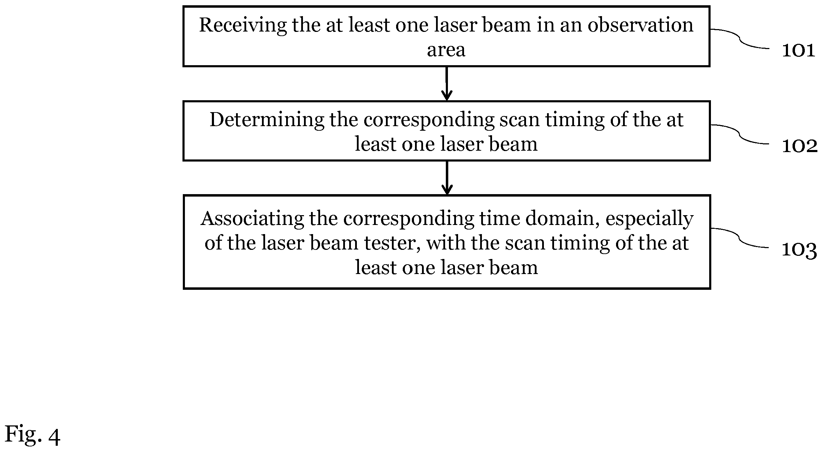

Finally, Fig. 4 illustrates a flow chart of an exemplary embodiment of a method, especially using the laser beam tester 10 according to Fig. 1 or the laser beam tester 30 according to Fig. 2, for laser beam timing and location determination with respect to a repetitive scan of at least one laser beam in a scan area based on at least one scan frame. A first step 101 of said method comprises receiving the at least one laser beam in an observation area, especially with the aid of the above-mentioned optical receiver 11 or 31, respectively. Furthermore, a second step 102 comprises determining the corresponding scan timing of the at least one laser beam, especially with the aid of the above-mentioned processor 12 or 32, respectively. Moreover, a third step 103 comprises associating the corresponding time domain, preferably of the above-mentioned laser beam tester 10 or 30, respectively, with the scan timing of the at least one laser beam, especially with the aid of the above-mentioned processor 12 or 32, respectively.

It is noted that it might be particularly advantageous if the method further comprises the step of determining the corresponding power distribution of the at least one laser beam based on the scan timing, especially with the aid of the above-mentioned processor 12 or 32, respectively.

It is further noted that it might be particularly advantageous if the method further comprises the step of changing the corresponding location of the observation area to determine the corresponding power distribution of the laser beam based on the scan timing, especially with the aid of the above-mentioned processor 12 or 32, respectively.

Furthermore, it might be particularly advantageous if the method further comprises the step of determining a time-based power distribution of different and/or subsequent scan frames, especially with the aid of the above-mentioned processor 12 or 32, respectively.

Moreover, it might be particularly advantageous if the method further comprises the step of changing the corresponding location of the observation area, especially across the scan area, to determine a time-based power distribution of different and/or subsequent scan frames, especially with the aid of the above-mentioned processor 12 or 32, respectively.

With respect to the above-mentioned scan area and the above-mentioned observation area, it is noted that it might be particularly advantageous if the observation area is smaller than the scan area.

It is further noted that it might be particularly advantageous if the method further comprises the step of using the time domain associated with the scan timing to determine a time-based scan pattern of the at least one laser beam for an entire repetition, especially with the aid of the above-mentioned processor 12 or 32, respectively.

Moreover, it might be particularly advantageous if the method further comprises the step of providing the corresponding power of the at least one laser beam, preferably to a user, especially with the aid of the above-mentioned processor 12 or 32, respectively.

Furthermore, it might be particularly advantageous if the method further comprises the step of providing a scan pattern analysis with respect to the at least one scan frame, preferably to a user, especially with the aid of the above-mentioned processor 12 or 32, respectively.

It is noted that it might be particularly advantageous if the method further comprises the step of determining a frame rate with respect to the at least one scan frame, especially with the aid of the above-mentioned processor 12 or 32, respectively.

It is further noted that it might be particularly advantageous if the method further comprises the step of determining a maximum repetition rate for adjacent laser beams, especially with the aid of the above-mentioned processor 12 or 32, respectively.

Moreover, it might be particularly advantageous if the method further comprises the step of determining average power for a particular time window with respect to the at least one laser beam, especially with the aid of the above-mentioned processor 12 or 32, respectively.

With respect to the above-mentioned scan timing, it is noted that it might be particularly advantageous if the scan timing comprises or is repetition frequency and/or phase with respect to the at least one laser beam.

Furthermore, it might be particularly advantageous if the method further comprises the step of associating the corresponding time domain, preferably of the above-mentioned laser beam tester 10 or 30, respectively, with the corresponding location and/or angle of the at least one laser beam, especially with the aid of the above-mentioned processor 12 or 32, respectively.

It is further noted that it might be particularly advantageous if the method further comprises the step of transmitting a return light signal in response to the at least one laser beam, especially with the aid of the above-mentioned optical transmitter 33 being in communication with the processor 32.

Moreover, it might be particularly advantageous if the method further comprises the step of manipulating the return light signal on the corresponding time basis to map a response to a particular location, especially with the aid of the above-mentioned processor 12 or 32, respectively.

Furthermore, it might be particularly advantageous if the method further comprises the step of manipulating the return light signal to shape at least one return object, especially with the aid of the above-mentioned processor 12 or 32, respectively.

It is noted that it might be particularly advantageous if the method further comprises the step of increasing contrast of the return light signal especially with the aid of spatial and/or temporal filtering, especially with the aid of the above-mentioned processor 12 or 32, respectively.

It is further noted that it might be particularly advantageous if the method further comprises the step of setting a frame trigger of the laser beam tester 10 or 30, respectively, such that the frame trigger of the laser beam tester 10 or 30, respectively, has a constant offset to a frame start of the laser beam emitting device 19 or 39, respectively, especially with the aid of the above-mentioned processor 12 or 32, respectively.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A laser beam tester for laser beam timing and location determination with respect to a repetitive scan of at least one laser beam in a scan area based on at least one scan frame, the laser beam tester comprising:
an optical receiver (11) configured to receive the at least one laser beam in an observation area, and
a processor (12) being in communication with the optical receiver (11),
wherein the processor (12) is configured to determine the corresponding scan timing of the at least one laser beam, and
wherein the processor (12) is configured to associate the corresponding time domain of the laser beam tester with the scan timing of the at least one laser beam.

2. The laser beam tester according to claim 1,
wherein the processor (12) is configured to determine the corresponding power distribution of the at least one laser beam based on the scan timing and/or
wherein the processor (12) is configured to determine a time-based power distribution of different and/or subsequent scan frames, and/or
wherein the processor is configured to determine average power for a particular time window with respect to the at least one laser beam.

3. The laser beam tester according to claim 1,
wherein the processor (12) is configured to change the corresponding location of the observation area to determine the corresponding power distribution of the laser beam based on the scan timing.

4. The laser beam tester according to any of the preceding claims,
wherein the processor (12) is configured to change the corresponding location of the observation area, especially across the scan area, to determine a time-based power distribution of different and/or subsequent scan frames.

5. The laser beam tester according to any of the preceding claims,
wherein the observation area is smaller than the scan area.

6. The laser beam tester according to any of the preceding claims,
wherein the processor is configured to use the time domain associated with the scan timing to determine a time-based scan pattern of the at least one laser beam for an entire or partial repetition.

7. The laser beam tester according to any of the preceding claims,
wherein the processor is configured to provide the corresponding power of the at least one laser beam especially to a user.

8. The laser beam tester according to any of the preceding claims,
wherein the processor is configured to provide a scan pattern analysis with respect to the at least one scan frame especially to a user.

9. The laser beam tester according to any of the preceding claims,
wherein the processor is configured to determine a frame rate with respect to the at least one scan frame, and/or
the processor is configured to determine a repetition rate, especially a maximum repetition rate, for adjacent laser beams.

10. The laser beam tester according to any of the preceding claims,
wherein the scan timing comprises or is repetition frequency and/or phase with respect to the at least one laser beam, and/or
wherein the processor is configured to associate the corresponding time domain of the laser beam tester with the corresponding location and/or angle of the at least one laser beam.

11. The laser beam tester according to any of the preceding claims, further comprising:
an optical transmitter being in communication with the processor,
wherein the optical transmitter is configured to transmit a return light signal in response to the at least one laser beam.

12. The laser beam tester according to claim 11,
wherein the processor is configured to manipulate the return light signal on the corresponding time basis to map a response to a particular location, and/or
wherein the processor is configured to manipulate the return light signal to shape at least one return object.

13. The laser beam tester according to any of claims 11 to 12,
wherein the processor is configured to increase contrast of the return light signal especially with the aid of spatial and/or temporal filtering.

14. A system comprising:
the laser beam tester according to claim any of claims 1 to 13, and
a laser beam emitting device configured to provide a repetitive scan of at least one laser beam in a scan area based on at least one scan frame, especially a lidar device or a lidar sensor,
wherein the laser beam tester is configured to determine laser beam timing and location with respect to the repetitive scan of the at least one laser beam.

15. The system according to claim 14,
wherein the processor of the laser beam tester is configured to set a frame trigger of the laser beam tester such that the frame trigger of the laser beam tester has a constant offset to a frame start of the laser beam emitting device.

16. A method, especially using the laser beam tester according to claim 1, for laser beam timing and location determination with respect to a repetitive scan of at least one laser beam in a scan area based on at least one scan frame, the method comprising the steps of:
receiving the at least one laser beam in an observation area,
determining the corresponding scan timing of the at least one laser beam, and
associating the corresponding time domain, especially of the laser beam tester, with the scan timing of the at least one laser beam.
